# EUROPÄISCHE PATENTSCHRIFT

(11) **EP 2 061 113 B1**
(45) Veröffentlichungstag und Bekanntmachung des Hinweises auf die Patenterteilung: **29.02.2012**
(21) Anmeldenummer: 08020114.8
(22) Anmeldetag: 18.11.2008
(51) Int. Cl.: H01M 8/06, H01M 8/04, H01M 8/10

(54) **Brennstoffzellensystem und Verfahren zu dessen Betrieb**
Fuel cell system and method for its operation
Système de cellules de combustible et son procédé de fonctionnement

(30) Priorität: 19.11.2007 DE 102007055179
(43) Veröffentlichungstag der Anmeldung: 20.05.2009
(73) Patentinhaber: EnyMotion GmbH, 74078 Heilbronn (DE)
(72) Erfinder: Wieland, Steffen, 74080 Heilbronn (DE)
(74) Vertreter: Strass, Jürgen

(56) Entgegenhaltungen:
- EP-A- 1 703 578
- WO-A-2004/079846
- DE-A1- 10 059 578
- DE-A1- 19 945 713
- JP-A- 2 139 871
- US-A- 5 019 463

## Beschreibung

Die Erfindung betrifft ein Brennstoffzellensystem gemäß dem Oberbegriff des Anspruches 1 sowie ein Verfahren zu dessen Betrieb gemäß dem Oberbegriff des Anspruchs 8.

Brennstoffzellen sind elektrochemische Energiewandler, die Strom in umweltverträglicher Weise in Bezug auf Geräuschentwicklung und Energieeffizienz herstellen können. Dazu wandeln Brennstoffzellen Wasserstoff oder kohlenwasserstoffhaltige Brennstoffe direkt in elektrischen Strom um. Als Brennstoff für die Brennstoffzelle wird wasserstoffreiches Synthesegas aus einem Kohlenwasserstoff erzeugt. Unter Verwendung von kohlenwasserstoffhaltigen Brennstoffen in einem Reformer wird der Kohlenwasserstoff mit Luft und Wasserdampf in Wasserstoff und weitere Nebenprodukte wie Kohlendioxid und Kohlenmonoxid umgewandelt.
Je nach erforderlichem Reinheitsgrad, der durch den verwendeten Brennstoffzellentyp bestimmt wird, können mindestens ein oder mehrere Gasaufbereitungsstufen vorgesehen werden.
Der Reformer wird zur Aufwärmung während des Starts vorzugsweise mit einer thermischen Startvorrichtung, insbesondere einem Gasbrenner, in dem eine vollständige Verbrennung abläuft, beheizbar.

Bekannt ist aus DE 100 59 578 A1 der Start eines Methanolsystems durch die vollständige Verbrennung von Methanol.

Die DE 199 45 713 A1 beschreibt eine Erwärmung der Brennstoffzellen mittels Erhitzung der Prozessluft durch Nutzung der Abwärme eines Reformers unter Zwischenschaltung von Filtern.

Insbesondere Hochtemperatur-Brennstoffzellen, wie in DE 101 55 543 beschrieben, sollten für eine leistungsfähige Betriebsweise oberhalb von 100 °C betrieben werden. Bei diesem BrennstoffzellenTyp besteht eine geringe Empfindlichkeit beim Betrieb der Brennstoffzellen im Hinblick auf die Nebenprodukte in den Produktgasen des Reformers.

Die nachhaltige Leistungsfähigkeit einer Brennstoffzelle ist insbesondere von der korrekten Funktionsweise der dort im inneren Reaktionsbereich zusammen mit Anode, Kathode und Elektrolyt befindlichen Katalysatoren abhängig. Gelangen unvollständige Verbrennungsrückstände oder unerwünschte Nebenprodukte, insbesondere Ruß, aus der Verbrennungsreaktion der thermischen Startvorrichtung oder mit Produktgasen des Reformers z.B. in der Anfahrphase in den inneren Bereich der Brennstoffzelle, d.h. in den Bereich, wo die Brenstoffzellen-Reaktionen ablaufen, speziell zur Anode der Brennstoffzelle, so kann deren Funktionsweise gestört werden. Zudem ist die Brennstoffzelle anodenseitig aufgrund von Restwasserstoff, der dort unter Umständen thermisch unkontrolliert abbrennen kann, luftempfindlich. Insbesondere bei Hochtemperatur-Brennstoffzellen sollte auch kein flüssiges Wasser aufgrund der Gefahr der Ausspülung des Elektrolyten und somit von Leistungseinbußen während der Startphase entstehen.

Daher ist eine direkte Erwärmung der Brennstoffzelle mit den Abgasen der thermischen Startvorrichtung oder der Produktgase des Reformers auf die erforderliche Betriebstemperatur von über 100°C problematisch. Die Erwärmung der Brennstoffzelle selbst erfolgt üblicher Weise z.B. durch elektrische Erwärmung oder Erwärmung der Prozessluft über Wärmetauscher.

Ein Brennstoffzellensystem und ein Verfahren zu dessen Betrieb mit den Merkmalen des Oberbegriffs des Anspruchs 1 bzw. des Anspruchs 8 sind aus der WO 2004/079846 A2 bekannt. Bei dieser Vorrichtung wird im Falle eines Kaltstarts das in einem Gaserzeugungssystem entstehende Gas nicht durch den Brennstoffzellenstapel, sondern mithilfe eines schaltbaren Dreiwegeventils und einer Bypassleitung um den Anodenraum des Brennstoffzellenstapels geleitet. Vor Erreichen der Bypassleitung kann das Gas einen Wärmetauscher durchströmen, damit sich durch Übertragung der thermischen Energie des Gases der Brennstoffzellenstapel schneller erwärmt.

Die US 5,019,463 A zeigt eine Brennstoffzellenanordnung, bei der wahlweise Umgebungsluft oder die Abgase eines Reformers einem Luftanschluss und einem Kühlmantelanschluss, der Brennstoffzelle zugeführt werden können.

Der Erfindung liegt die Aufgabe zugrunde ein Brennstoffzellensystem sowie ein Verfahren zu dessen Betrieb vorzusehen, welches die Nachteile des Standes der Technik überwindet und insbesondere die Abwärme des Reformers, insbesondere beim Start des Brennstoffzellensystems auf konstruktiv und verfahrenstechnisch einfache Art und Weise nutzt. Ein weiteres Ziel der Erfindung ist es, das Brennstoffzellensystem, insbesondere Hochtemperatur-Brennstoffzellensysteme, ohne schädliche Einflüsse durch unerwünschte Reaktionen im inneren Reaktionsbereich der Brennstoffzelle(n) schnell anfahren zu können.

Erfindungsgemäß wird die Aufgabe mit einer Vorrichtung mit den Merkmalen des Anspruchs 1 sowie mit einem Verfahren mit den Merkmalen des Anspruchs 8 gelöst. Vorteilhafte Weiterbildungen sind den Unteransprüchen zu entnehmen.

Das erfindungsgemäße Brennstoffzellensystem umfasst einen Reformer mit thermischer Startvorrichtung, mindestens eine dem Reformer nachgeschaltete Gasaufbereitungsstufe und mindestens eine der Gasaufbereitungsstufe nachgeschaltete, eine Mehrzahl von Bipolarplatten aufweisende Brennstoffzelle mit einem inneren Bereich einer Reaktion, insbesondere mit Anode, Kathode und Elektrolyt, und einem äußeren Bereich mit zumindest einem von einem Kühlmedium durchströmbaren Kühlkanal und ohne Fluidverbindung zu dem inneren Bereich. Die Brennstoffzelle besitzt im äußeren Bereich zusätzliche Kanalstrukturen des Reformers welche mit der Umschaltvonichtung in Fluidverbindung bringbar sind, so dass die Produktgase durch die zusätzlichen Kanalstrukturen und/oder den Kühlkanal leitbar sind. Stromaufwärts vor der Brennstoffzelle eine Umschaltvorrichtung vorgesehen, welche umschaltbar ist zwischen einer Anfahrstellung, wobei in der Anfahrstellung Produktgase des Reformers und/oder der thermischen Startvorrichtung zumindest beim Startvorgang über den äußeren Bereich der Brennstoffzelle leitbar sind, um die Brennstoffzelle zu erwärmen, und mindestens einer Betriebsstellung, wobei in der Betriebsstellung die Produktgase des Reformers und/oder der thermischen Startvorrichtung dem inneren Bereich der Brennstoffzelle zuführbar sind.

Die Oberfläche des zumindest einen Kühlkanals und/oder der zusätzlichen Kanalstrukturen, der bzw. die von den Produktgasen des Reformers durchströmt wird bzw. werden, ist mit einem Katalysator beschichtet.

Gemäß der Erfindung ist somit konstruktiv vorgesehen, dass eine thermische Verbindung vom inneren Bereich, z.B. der Anode, zu dem zumindest einen Kühlkanal bzw. den Kühlkanälen im äußeren Bereich der Brennstoffzellen besteht, in welche die noch heißen Abgase einer thermischen Startvorrichtung während der Aufwärmphase des Reformers geführt werden. Somit besteht eine wärmetechnische Verbindung von den Kühlkanälen zu der Anoden- und aber auch bevorzugt zur Kathodenseite der Brennstoffzelle. Vorteilhaft sind diese Kühlkanäle als Luftkanäle für eine Kühlung der Brennstoffzelle durch Luft während der normalen Betriebsphase ausgebildet Erfindungsgemäß ist so eine gute Wärmeankopplung ohne Fluidverbindung zwischen dem entsprechenden inneren Bereich und dem entsprechenden äußeren Bereich gegeben.

Um erfindungsgemäß zu vermeiden, dass die luftempfindliche Brennstoffzelle anodenseitig aufgrund von Restwasserstoff, der dort thermisch unkontrolliert abbrennen kann, beschädigt wird und dass insbesondere bei Hochtemperatur-Brennstoffzellen kein flüssiges Wasser aufgrund der Gefahr der Ausspülung des Elektrolyten und somit von Leistungseinbußen während der Startphase entstehen kann, ist ein entsprechendes Mehrwegeventil vor der Brennstoffzelle zur Umleitung der Produktgase des Reformers und/oder der thermischen Startvorrichtung zum äußeren Bereich beim Anfahren der Anlage vorgesehen.

Während der normalen Betriebsphase kann dann ein eine Betriebsstellung umgeschaltet werden, wobei in der Betriebsstellung die Produktgase des Reformers und/oder der thermischen Startvorrichtung dem inneren Bereich der Brennstoffzelle zuführbar sind, z.B. der Anode zuführbar sind.

Bevorzugt kann bei dem Brennstoffzellensystem der Erfindung des zumindest eine Kühlkanal in zumindest einer der Bipolarplatten verlaufen und zwischen der Umschaltvorrichtung und dem zumindest einen Kühlkanal eine Fluidverbindung bestehen, so dass die Produktgase durch den zumindest einen Kühlkanal leitbar sind. Dadurch kann auf konstruktiv einfache Art und Weise eine sehr gute Wärmeankopplung zwischen dem entsprechenden innerem Bereich und dem entsprechenden äußerem Bereich, erzielt werden.

Die zusätzlichen Kanalstrukturen sind bevorzugt in den Bipolarplatten angeordnet mit den optionalen zusätzlichen Kanalstrukturen kann die Wärmeankopplung weiter verbessert werden.

Gemäß der noch weiteren, konstruktiven Ausbildung ist beispielsweise der Bereich des Eingangs der Brennstoffzellen-Anode mit zusätzlichen Kanälen versehen, die in den Bipolarplatten im äußeren Bereich getrennt zu dem zumindest einen Kühlkanal/den Kühlkanälen verlaufen. Diese Ausführung erlaubt eine von der Kühlvorrichtung der Brennstoffzellen getrennte Erwärmung und ist somit sicherheitstechnisch einfacher zu realisieren.

Als Kühlmedium kann besonders einfach Luft eingesetzt werden.

Besonders effektiv hinsichtlich der Vermeidung der üblichen Schwierigkeiten des Standes der Technik (siehe oben) ist das erfindungsgemäße Brennstoffzellensystem einsetzbar, wenn die Brennstoffzelle eine Hochtemperatur-Brennstoffzelle im Temperaturbereich zwischen 100-200 °C ist.

Bei dem Brennstoffzellensystem der Erfindung kann die thermische Startvorrichtung ein Brenner sein, der zur vollständigen Verbrennung der Einsatzbrennstoffe geeignet ist.

Das erfindungsgemäße Verfahren betrifft das Anfahren und den Betrieb eines . Brennstoffzellensystems mit einem Reformer mit thermischer Startvorrichtung, mindestens einer dem Reformer nachgeschalteten Gasaufbereitungsstufe und mindestens einer der Gasaufbereitungsstufe nachgeschalteten, eine Mehrzahl von Bipolarplatten aufweisenden Brennstoffzelle mit einem inneren Bereich einer Reaktion, insbesondere mit Anode, Kathode und Elektrolyt, und einem äußeren Bereich mit zumindest einem von einem Kühlmedium durchströmbaren Kühlkanal und ohne Fluidverbindung zu dem inneren Bereich, wobei der Reformer mittels der thermischen Startvorrichtung erwärmt wird. Eine Umschaltvorrichtung stromaufwärts vor der Brennstoffzelle kann umgeschaltet werden zwischen einer Anfahrstellung, wobei in der Anfahrstellung Produktgase des Reformers und/oder der thermischen Startvorrichtung zumindest beim Startvorgang über den äußeren bereich der Brennstoffzelle geleitet werden, um die Brennstoffzelle zu erwärmen, und zumindest einer Betriebsstellung, wobei in der Betriebsstellung die Produktgase des Reformers und/oder der thermischen Startvorrichtung dem inneren Bereich der Brennstoffzelle zugeführt werden.

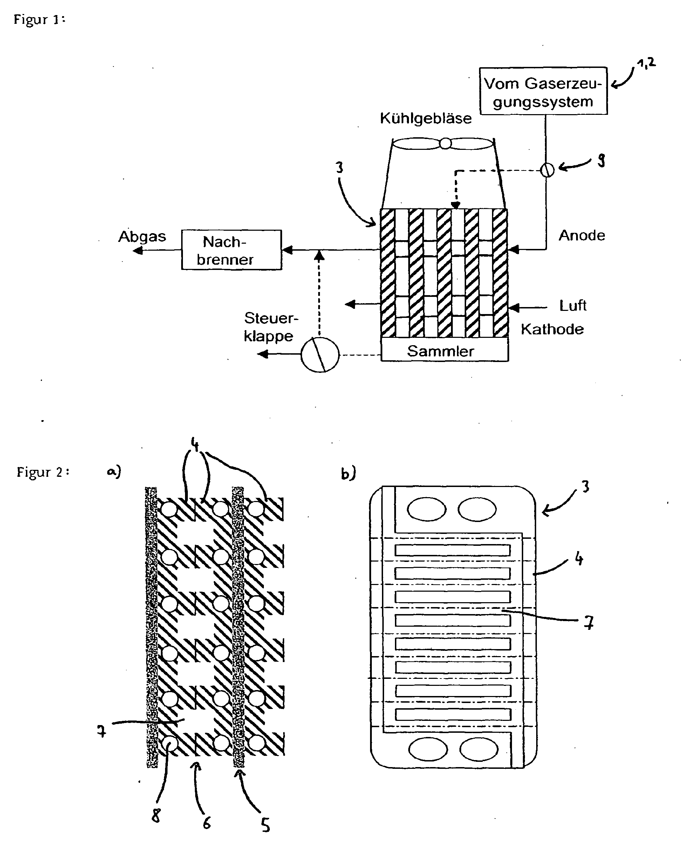

Das Verfahren zum Start eines Brennstoffzellensystems, insbesondere mit Hochtemperatur-Brennstoffzelle, ist dadurch gekennzeichnet, dass beim Anfahrvorgang der Verbrennungsprozess mit einer vollständigen Verbrennung von Brennstoff und Luft in der thermischen Startvorrichtung eingeleitet wird. Das dabei entstehende heiße Abgas erwärmt nachgeschaltete Komponenten des Reformers wie Gasaufbereitungsstufen. Durch die Zufuhr der noch heißen Gase in die Kühlkanäle oder zusätzlichen Kanäle wird erfindungsgemäß mittels der wännetechnischen Verbindung einerseits eine schnelle Erwärmung der Brennstoffzelle realisiert. Andererseits erlaubt die erfindungsgemäße räumliche bzw. fluidmäßige Trennung zum inneren Bereich, insbesondere zur Anodenseite, die Brennstoffzelle bzw. den inneren Reaktionsbereich der Brennstoffzelle schonend auf die erforderliche Betriebstemperatur zu bringen. Das in der Brennstoffzelle abgekühlte Abgas wird in die Nachverbrennung, die vorzugsweise als katalytischer Brenner ausgeführt ist, eingeleitet und kann dort noch seine Restwärme abgeben (Siehe auch Figur 1).

Erst ab dem Erreichen der optimalen Reaktionstemperatur im Reformer wird die Luft-, Brennstoff- und/oder Wassermenge nach den festgelegten Erfordernissen der partiellen Oxidation, der autothermen Reformierung oder der Dampfreformierung geregelt. Anfangs entsteht Produktgas, das noch unerwünschte Nebenprodukte enthält. In dieser Phase wird das Produktgas weiterhin in die Kühlkanäle (siehe auch Figur 2a und 2b) oder vorzugsweise zusätzlichen Kanäle der Brennstoffzelle geleitet

Bei dem Verfahren der Erfindung wird bevorzugt die thermische Startvorrichtung bei Erreichen der Betriebstemperatur des Reformers abgeschaltet und dann werden die Produktgase des Reformers über den äußeren Bereich der Brennstoffzelle, bevorzugt durch den zumindest einen Kühlkanal, welcher besonders bevorzugt in den Bipolarplatten verläuft, geleitet, bis die Brennstoffzelle ihre Betriebstemperatur erreicht hat.

Erst dann wird in eine Betriebsstellung umgeschaltet, wobei in der Betriebsstellung die Produktgase des Reformers und/oder der thermischen Startvorrichtung dem inneren Bereich der Brennstoffzelle zugeführt werden.

Bei dem Verfahren der Erfindung können die Abgase der thermische Startvorrichtung oder die Produktgase des Reformers bevorzugt über zusätzliche Kanalstrukturen im äußeren Bereich geleitet werden.

Die Brennstoffzellen ist bevorzugt eine Hochtemperaturbrennstoffzelle.

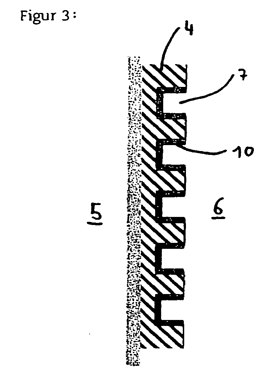

Eine erfindungsgemäße konstruktive Ausbildung sieht vor, dass die Kühlkanäle oder zusätzlichen Kanäle mit einem Katalysator versehen sind (Siehe auch Figur 3). Aufgrund des hohen Gehaltes an brennbaren Gasen im Produktgas, wie z.B. Wasserstoff, während der Startphase des Reformers, kann dieses Gas durch Zusatz von Luftsauerstoff am Katalysator in den Kühlkanälen thermisch umgesetzt werden. Die dabei entstehende Wärme dient zur zusätzlichen Erwärmung der Brennstoffzelle sowie Aufheizung in der Startphase. Nicht in den Kanälen umgesetzte brennbare Gase können in dem nachfolgenden Katalytischen Brenner dann voll ständig umgesetzt werden.

Nach dieser vorteilhaften Ausgestaltung der Hochtemperatur-Brennstoffzelle und des entsprechenden Betriebsverfahrens ist eine Temperaturregelung zur Steuerung der Phasenübergänge vorgesehen, wobei ein Mittel zur Temperaturmessung an der Brennstoffzelle selbst oder an deren Ausgang angebracht ist.

Mit der Erfindung wird auf konstruktiv einfache Art und Weise ein einfaches, schnelles und schonendes Anfahren bzw. ein Betrieb für ein Brennstoffzellensystem vorzugsweise mit einer Hochtemperatur-Membran geschaffen, bei dem die bisher relativ aufwändigen Regeltechniken speziell bei Anfahrvorgängen vermieden werden können. Durch die erfindungsgemäße Zwischenschaltung und Steuerung einer Umschaltvorrichtung, bevorzugt eines Ventils, noch bevorzugter eines Mehrwegventils, und gegebenenfalls der Berücksichtigung weniger, einfach zu messender Parameter, wie zum Beispiel Temperaturen, kann die schonende Erwärmung des Brennstoffzellensystems sichergestellt werden und parallel dazu können keine schädlichen Stoffe in den inneren Bereich der empfindlichen Brennstoffzelle gelangen. Auch der Reformer besitzt somit eine größere Robustheit. Er ist unempfindlicher gegen sich bildende Reaktionsrückstände und Feuchtigkeit, weil der dortige Katalysator beim Start durch eine thermische Startvorrichtung auf die für einen russfreien Betrieb erforderliche Betriebstemperatur gebracht werden und danach sofort der Reformierprozess begonnen werden kann.

Vorteilhafte Weiterbildungen ergeben sich aus den abhängigen Ansprüchen.

Die Erfindung wird im Folgenden beispielhaft anhand der beigefügten Zeichnung mit Figuren 1 bis 5 näher erläutert.

Die Figur 1 stellt ein Ausführungsbeispiel der Erfindung dar und zeigt schematisch gestrichelt die Verschaltung des Brennstoffzellen-Stacks während der Anfahrphase und durchgezogen die Verschaltung während einer Betriebsphase.

Die Figuren 2a und 2b zeigen schematisch den Aufbau von Bipolarplatten mit Kühlkanälen und zusätzlichen Kanälen, die für die Startphase mit heißen Produktgasen durchströmt werden.

Die Figur 3 zeigt schematisch eine Bipolarplatte mit einer Beschichtung mit einem Katalysatormaterial auf der Kühlmedienseite.

Die Figur 4 zeigt schematisch einen typischen Verlauf der Temperaturen, des Wasserstoffgehalts sowie des Kohlenmonoxidgehalts eines Produktgases eines Reformers.

Die Figur 5 zeigt schematisch eine weitere Ausführungsform der Erfindung mit einem separaten Brenner.

In den Figuren gezeigt ist ein Brennstoffzellensystem bzw. Teile dieses Systems gemäß einer bevorzugten Ausführungsform der Erfindung. Das gezeigte Brennstoffzellensystem umfasst unter anderem einen Reformer 1 mit thermischer Startvorrichtung, mindestens eine dem Reformer 1 nachgeschaltete Gasaufbereitungsstufe 2 und mindestens eine der Gasaufbereitungsstufe 2 nachgeschaltete, eine Mehrzahl von Bipolarplatten 4 aufweisende Brennstoffzelle 3 mit einem inneren Bereich 5 einer Reaktion, insbesondere mit Anode, Kathode und Elektrolyt, und einem äußeren Bereich 6 mit zumindest einem von einem Kühlmedium durchströmbaren Kühlkanal 7 und ohne Fluidverbindung zu dem inneren Bereich 5. Ferner ist stromaufwärts vor der Brennstoffzelle 3 eine Umschaltvorrichtung 9 vorgesehen, welche umschaltbar ist zwischen einer Anfahrstellung, wobei in der Anfahrstellung Produktgase des Reformers und/oder der thermischen Startvorrichtung zumindest beim Startvorgang über den äußeren Bereich 6 der Brennstoffzelle 3 leitbar sind, um die Brennstoffzelle 3 zu erwärmen, und mindestens einer Betriebsstellung, wobei in der Betriebsstellung die Produktgase des Reformers und/oder der thermischen Startvorrichtung dem inneren Bereich 5 der Brennstoffzelle 3 zuführbar sind.

Wie besonders gut in den Figuren 2a und 2b zu sehen, verläuft der zumindest eine Kühlkanal 7 in zumindest einer der Bipolarplatten 4, und zwischen der Umschaltvorrichtung 9 und dem zumindest einen Kühlkanal 7 besteht eine Fluidverbindung, so dass die Produktgase durch den zumindest einen Kühlkanal 7 leitbar sind. Zusätzlich besitzt die Brennstoffzelle 3 im äußeren Bereich 6 zusätzliche Kanalstrukturen 8, welche mit der Umschaltvomchtung 9 in Fluidverbindung bringbar sind, so dass die Produktgase durch die zusätzlichen Kanalstrukturen 8 und den zumindest einen Kühlkanal 7 leitbar sind, wobei die zusätzlichen Kanalstrukturen 8 bevorzugt in den Bipolarplatten 4 angeordnet sind.

Wie in Figur 3 zu sehen, können zumindest die Oberfläche der Kühlkanäle 7 im äußeren Bereich 6 der Bipolarplatten 4 mit einem Katalysator 10 beschichtet sein.

In der Startphase wird der Reformer 1 auf Nennbetrieb gebracht, da in dieser Phase der CO-Gehalt aufgrund (noch) nicht stationärer Verhältnisse und noch zu geringen Temperaturniveaus der Gasverarbeitungsstufen zu hoch ist. Der Wasserstoff im Produktgas mit einem hohen Heizwert kann also nicht in der Brennstoffzelle 3 umgesetzt werden, sondern muss außerhalb thermisch umgewandelt, also oxidiert werden.

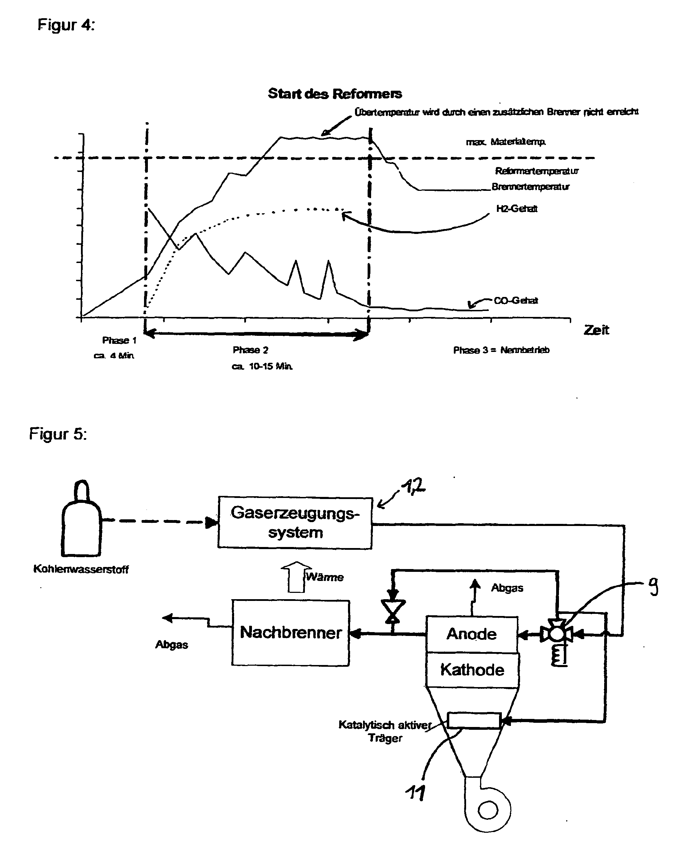

Die Figur 4 zeigt einen typischen Verlauf der Temperaturen, des Wasserstoffgehalts sowie des Kohlenmonoxidgehalts des Produktgases des Reformers im Verlauf von drei typischen Phasen des Starts/Betriebs des Reformers.

Ein Nachbrenner kann bevorzugt vorgesehen sein, welcher nur für die Verbrennung der niederkalorischen Restgase mit geringem Wasserstoffgehalt aus der Brennstoffzelle ausgelegt ist. Wird während der oben beschriebenen Startphase das Produktgas des Reformers direkt auf diesen Nachbrenner geleitet, so würde dieser überhitzen.

Für einen vollständigen Umsatz kann vorteilhaft das Produktgas oder große Teile davon in einem separaten Brenner (siehe Figur 5, Bezugszeichen 11), bevorzug ein katalytischer Brenner, umgesetzt und die Abgase dieses separaten Brenners zur Erwärmung der Brennstoffzelle genutzt werden, indem diese heißen Abgase z.B. über die Kühlkanäle geleitet werden.

Bevorzugt kann dabei ein Verfahren mit folgenden drei Phasen (siehe Figur 4) ablaufen:
1. Phase: Aufheizen des Systems a.) elektrisch b.) Konventionelle Verbrennung im Nachbrenner.
2. Phase: Bei Erreichen der Zündtemperatur des Reformers wird dieser mit Brennstoff und Luft (evtl. Wasserdampf, falls die Erwärmung durch den Brenner ausreichend war um Wasserdampf herzustellen) beschickt. Dadurch erfolgt die Herstellung von Produktgas mit Wasserstoff und hohen Konzentrationen von Kohlenmonoxid im Reformer, das um die Brennstoffzelle geleitet werden muss (Anfahrstellung). Dies erfolgt solange bis die Betriebstemperaturen aller Gaserzeugungsstufen auf Nennbetriebstemperatur liegen.

Es erfolgt eine Verbrennung des Produktgases des Reformers mit hohen CO-Konzentrationen: a.) zu dem Teil im Nachbrenner, wie die thermische Restriktion des Materials bzw. Katalysators im Brenner zulässt b.) der gesamte Anteil in einem separaten katalytischen Brenner, der sich entweder im Abluftstrang des gesamten Systems (keine weitere Thermische Nutzung) oder in der Vorrichtung vor der Brennstoffzelle zur Erwärmung derselben befindet. Dabei kann der Kühlventilator gleichzeitig als Luftfördermedium für die Verbrennungsluft zur Oxidation des Produktgases des Reformers dienen.
3. Phase: Nennbetrieb, wobei die Umschaltvorrichtung 9 in Betriebsstellung geschaltet ist. Beispielsweise wird in der 1. Phase der Katalysator des Reformers oder des Katalytischen Nachbrenners durch die thermische Startvorrichtung, vorzugsweise durch eine elektrische Erwärmung des Katalysators oder der Edukte, die in der 1. Phase den Katalysator durchströmen, bis auf die light off Temperatur des Katalysators im Bereich von 250 bis 500°C, vorzugsweise 420°C erwärmt. Die Aufwärmzeit ist abhängig von der thermischen Masse und liegt bei ausreichend dimensioniertem Heizträger bei 2 bis 10 Minuten, bevorzugt 4 Minuten.

In der 2. Phase wird der Katalysator zur Reformierung beispielsweise mit Kohlenwasserstoffen und unterstöchiometrisch zugeführter Luft im Bereich von Luftlamda 0,1 bis 0,8 bevorzugt 0,2 beaufschlagt, so dass der Katalysator exotherm bis zu seiner Betriebstemperatur im Bereich von 500 bis 900°C. vorzugsweise 750°C reagiert. Um eine sehr kurze Startzeit zu ermöglichen und schnell die Betriebstemperatur im Reformer und vor allem die nachfolgenden Gasverarbeitungsstufen zu erreichen, sollten die Edukte entsprechend der Nennlast dosiert werden.

Die 2. Phase dauert beispielsweise so lange, bis die Gasreinigungsstufen auf Betriebstemperatur sind und die CO-Konzentration zwischen 20 und 200ppm, vorzugsweise 50ppm für eine Niedertemperatur Brennstoffzelle und 1% bis 3 % für eine Hochtemperaturbrennstoffzelle erreichen. Die Betriebszeit der 2. Phase ist abhängig von den thermischen Massen der Katalysatoren sowie deren Umsatzverhalten in Abhängigkeit der Temperatur und liegt bei ausreichender Dimensionierung bei 2 bis 50 Minuten, bevorzugt 10 Minuten.

Der im Reformer entstehende Wasserstoff kann in der 2. Phase durch die aktivierte Umleitung der Produktgase um die Brennstoffzelle herum (Anfahrstellung) nicht in der Brennstoffzelle umgesetzt werden. Eine Ausgestaltung der Erfindung sieht vor, dass dieser Wasserstoff in einem separaten Brenner, (siehe Figur 5, Bezugszeichen 11) vorzugsweise einem katalytischen Brenner, beispielsweise unter zusätzlicher Zuführung von Luftsauerstoff im überstöchiometrischen Luftverhältnis von 1,1 bis 4,5 verbrennt. Die dabei entstehende Wärme kann zur Erwärmung der Systemkomponenten, insbesondere für Hochtemperaturbrennstoffzellen, dienen, Im Fall der Erwärmung der Hochtemperaturbrennstoffzelle soll diese bis zu einer Betriebstemperatur von 140-200°C. vorzugsweise 160°C, erwärmt werden, bevor die Betriebsphase (3- Phase) bzw. der Nennbetrieb erfolgen kann.

Die Figur 5 zeigt schematisch eine weitere Ausführungsform der Erfindung, wobei ein separater Brenner 11 in dem gezeigten Fall als katalytischer Brenner im Bereich der zusätzlichen Kanalstrukturen bzw. des zumindest einen Kühlkanals dort als katalytische Beschichtung angeordnet ist.

## Patentansprüche

1. Brennstoffzellensystem, umfassend einen Reformer (1) mit thermischer Startvorrichtung, mindestens eine dem Reformer (1) nachgeschaltete Gasaufbereitungsstufe (2) und mindestens eine der Gasaufbereitungsstufe (2) nachgeschaltete, eine Mehrzahl von Bipolarplatten (4) aufweisende Brennstoffzelle (3) mit einem inneren Bereich (5) einer Reaktion, insbesondere mit Anode, Kathode und Elektrolyt, und einem äußeren Bereich (6) mit zumindest einem von einem Kühlmedium durchströmbaren Kühlkanal (7) und ohne Fluidverbindung zu dem inneren Bereich (5) sowie optionalen zusätzlichen Kanalstrukturen (8), welche mit der Umschaltvorrichtung (9) in Fluidverbindung bringbar sind, so dass die Produktgase des Reformers durch die zusätzlichen Kanalstrukturen (8) und/oder den zumindest einen Kühlkanal (7) leitbar sind, wobei stromaufwärts vor der Brennstoffzelle (3) eine Umschaltvorrichtung (9) vorgesehen ist, welche umschaltbar ist zwischen einer Anfahrstellung, wobei in der Anfahrstellung für die Produktgase des Reformers und/oder der thermischen Startvorrichtung zumindest beim Startvorgang ein Strömungsweg über den äußeren Bereich (6) der Brennstoffzelle (3) hergestellt ist, um die Brennstoffzelle (3) zu erwärmen, und mindestens einer Betriebsstellung, wobei in der Betriebsstellung für die Produktgase des Reformers und/oder der thermischen Startvorrichtung ein Strömungsweg zu dem inneren Bereich (5) der Brennstoffzelle (3) hergestellt ist, **dadurch gekennzeichnet, dass** die Oberfläche des zumindest einen Kühlkanals (7) und/oder der zusätzlichen Kanalstrukturen (8), der bzw. die von den Produktgasen des Reformers durchströmt wird bzw. werden, mit einem Katalysator (10) beschichtet ist.

2. Brennstoffzellensystem nach Anspruch 1, **dadurch gekennzeichnet, dass** der zumindest eine Kühlkanal (7) in zumindest einer der Bipolarplatten (4) verläuft und zwischen der Umschaltvorrichtung (9) und dem zumindest einen Kühlkanal (7) eine Fluidverbindung besteht, so dass die Produktgase durch den zumindest einen Kühlkanal (7) leitbar sind.

3. Brennstoffzellensystem nach Anspruch 1 oder 2, **dadurch gekennzeichnet, dass** die zusätzlichen Kanalstrukturen (8) bevorzugt in den Bipolarplatten (4) angeordnet sind.

4. Brennstoffzellensystem nach Anspruch 1 bis 3, **dadurch gekennzeichnet, dass** das Kühlmedium Luft ist.

5. Brennstoffzellensystem nach Anspruch 1 bis 4, **dadurch gekennzeichnet, dass** die Brennstoffzelle (3) eine Hochtemperatur-Brennstoffzelle im Temperaturbereich zwischen 100-200 °C ist.

6. Brennstoffzellensystem nach Anspruch 1 bis 5, **dadurch gekennzeichnet, dass** ein separater Brenner (11), bevorzugt ein katalytischer Brenner, im Bereich der zusätzlichen Kanalstrukturen (8) und/oder des zumindest einen Kühlkanals (7) angeordnet ist.

7. Brennstoffzellensystem nach Anspruch 1 bis 6, **dadurch gekennzeichnet, dass** die Thermische Startvorrichtung ein Brenner, geeignet zur vollständigen Verbrennung der Einsatzbrennstoffe ist.

8. Verfahren zum Anfahren und Betrieb eines Brenn Stoffzellensystems mit einem Reformer mit thermischer Startvorrichtung, mindestens einer dem Reformer nachgeschalteten Gasaufbereitungsstufe und mindestens einer der Gasaufbereitungsstufe nachgeschalteten, eine Mehrzahl von Bipolarplatten aufweisenden Brennstoffzelle mit einem inneren Bereich einer Reaktion, insbesondere mit Anode, Kathode und Elektrolyt, und einem äußeren Bereich mit zumindest einem von einem Kühlmedium durchströmbaren Kühlkanal und ohne Fluidverbindung zu dem inneren Bereich, wobei der Reformer mittels der thermischen Startvorrichtung erwärmt wird, wobei eine Umschaltvorrichtung stromaufwärts vor der Brennstoffzelle umgeschaltet wird zwischen einer Anfahrstellung, wobei in der Anfahrstellung Produktgase des Reformers und/oder der thermischen Startvorrichtung zumindest beim Startvorgang über den äußeren Bereich der Brennstoffzelle geleitet werden, um die Brennstoffzelle zu erwärmen, und zumindest einer Betriebsstellung, wobei in der Betriebsstellung die Produktgase des Reformers und/oder der thermischen Startvorrichtung dem inneren Bereich der Brennstoffzelle zugeführt werden, **dadurch gekennzeichnet, dass** die Produktgase des Reformers mittels einer katalytischen Beschichtung der Oberfläche des zumindest einen Kühlkanals und/oder der zusätzlichen Kanalstrukturen der bzw. die von den Produktgasen des Reformers durchströmt wird bzw werden, zur zusätzlichen Wärmeerzeugung chemisch umgewandelt werden.

9. Verfahren nach Anspruch 8, **dadurch gekennzeichnet, dass** die thermische Startvorrichtung bei Erreichen der Betriebstemperatur des Reformers abgeschaltet wird und dann die Produktgase des Reformers über den äußeren Bereich der Brennstoffzelle, bevorzugt durch den zumindest einen Kühlkanal, welcher besonders bevorzugt in den Bipolarplatten verläuft, geleitet werden, bis die Brennstoffzelle ihre Betriebstemperatur erreicht hat.

10. Verfahren nach Anspruch 8 oder 9, **dadurch gekennzeichnet, dass** die Abgase der thermischen Startvorrichtung oder die Produktgase des Reformers über zusätzliche Kanalstrukturen im äußeren Bereich geleitet werden.

11. Verfahren nach Anspruch 8 bis 10, **dadurch gekennzeichnet, dass** die Brennstoffzelle eine Hochtemperaturbrennstoffzelle ist.

12. Verfahren nach Anspruch 8 bis 11, **dadurch gekennzeichnet, dass** die Umwandlung bei einer Umschaltung in Anfahrstellung in einer Startphase des Reformers erfolgt.

13. Verfahren nach Anspruch 8 bis 12, **dadurch gekennzeichnet, dass** in Anfahrstellung während der Startphase der Reformer in seinem Nennbetrieb aufgeheizt wird und der zuviel erzeugte Wasserstoff bei Nennbetrieb des Reformers, der in Betriebs Stellung in der Brennstoffzelle umgesetzt wird, in der Anfahrstellung unter Zugabe von Luft in dem separaten Brenner umgewandelt wird.

14. Verfahren nach Anspruch 8 bis 13, **dadurch gekennzeichnet, dass** die erzeugte Wärme zur Vorwärmung von Systemkomponenten dient.

## Claims

1. A fuel cell system, comprising a reformer (1) having a thermal starting device, at least one gas processing stage (2) connected downstream of the reformer (1), and at least one fuel cell (3) connected downstream of the gas processing stage (2), including a plurality of bipolar plates (4) and having an inner portion (5) of a reaction, in particular with an anode, a cathode and an electrolyte, and an outer portion (6) with at least one cooling channel (7) through which a cooling medium can flow, and without a fluid connection with the inner portion (5), and optional additional channel structures (8) which are adapted to be brought into fluid connection by means of the switchover device (9), so that the product gases of the reformer can be guided through the additional channel structures (8) and/or the at least one cooling channel (7), a switchover device (9) being provided upstream of the fuel cell (3) which is adapted to be switched over between a start-up position, in which a flow path is established via the outer portion (6) of the fuel cell (3) for the product gases of the reformer and/or of the thermal starting device at least during the starting process in order to heat the fuel cell (3), and at least one operating position, in which a flow path is established to the inner portion (5) of the fuel cell (3) for the product gases of the reformer and/or of the thermal starting device, **characterized in that** the surface of the at least one cooling channel (7) and/or of the additional channel structures (8), which is/are traversed by the product gases of the reformer, is coated with a catalyst (10).

2. The fuel cell system according to claim 1, **characterized in that** the at least one cooling channel (7) runs in at least one of the bipolar plates (4) and a fluid connection exists between the switchover device (9) and the at least one cooling channel (7), so that the product gases can be guided through the at least one cooling channel (7).

3. The fuel cell system according to claim 1 or 2, **characterized in that** the additional channel structures (8) are preferably arranged in the bipolar plates (4).

4. The fuel cell system according to claim 1 to 3, **characterized in that** the cooling medium is air.

5. The fuel cell system according to claim 1 to 4, **characterized in that** the fuel cell (3) is a high-temperature fuel cell in the temperature range between 100 and 200°C.

6. The fuel cell system according to claim 1 to 5, **characterized in that** a separate burner (11), preferably a catalytic burner, is arranged in the region of the additional channel structures (8) and/or the at least one cooling channel (7).

7. The fuel cell system according to claim 1 to 6, **characterized in that** the thermal starting device is a burner suitable for complete combustion of the fuels used.

8. A method of starting and operating a fuel cell system comprising a reformer having a thermal starting device, at least one gas processing stage connected downstream of the reformer, and at least one fuel cell connected downstream of the gas processing stage, including a plurality of bipolar plates and having an inner portion of a reaction, in particular with an anode, a cathode and an electrolyte, and an outer portion with at least one cooling channel through which a cooling medium can flow, and without a fluid connection with the inner portion, the reformer being heated by means of the thermal starting device, a switchover device upstream of the fuel cell being switched over between a start-up position, in which product gases of the reformer and/or of the thermal starting device are guided via the outer portion of the fuel cell at least during the starting process in order to heat the fuel cell, and at least one operating position, in which the product gases of the reformer and/or of the thermal starting device are supplied to the inner portion of the fuel cell, **characterized in that** the product gases of the reformer are chemically converted by means of a catalytic coating of the surface of the at least one cooling channel and/or of the additional channel structures, which is/are traversed by the product gases of the reformer, for an additional heat generation.

9. The method according to claim 8, **characterized in that** the thermal starting device is switched off when the operating temperature of the reformer is reached, and the product gases of the reformer are then guided via the outer portion of the fuel cell, preferably through the at least one cooling channel, which particularly preferably runs in the bipolar plates, until the fuel cell has reached its operating temperature.

10. The method according to claim 8 or 9, **characterized in that** the exhaust gases of the thermal starting device or the product gases of the reformer are guided via additional channel structures in the outer portion.

11. The method according to claim 8 to 10, **characterized in that** the fuel cell is a high-temperature fuel cell.

12. The method according to claim 8 to 11, **characterized in that** the conversion is effected upon a switchover to the start-up position in a starting phase of the reformer.

13. The method according to claim 8 to 12, **characterized in that** in the start-up position during the start-up phase, the reformer is heated up in its nominal operation and the excess of hydrogen generated during nominal operation of the reformer, which is reacted in the fuel cell in the operating position, is converted in the start-up position in the separate burner while adding air.

14. The method according to claim 8 to 13, **characterized in that** the generated heat serves to preheat system components.

## Revendications

1. Système de piles à combustible, comprenant un reformeur (1) avec dispositif de mise en marche thermique, au moins un étage de traitement de gaz (2) placée en aval du reformeur (1) et au moins une pile à combustible (3) placée en aval de l'étage de traitement de gaz (2), présentant une multitude de plaques bipolaires (4) avec une zone intérieure (5) d'une réaction, en particulier avec anode, cathode et électrolyte, et une zone extérieure (6) avec au moins un canal de refroidissement (7) à travers lequel peut passer un fluide de refroidissement et sans liaison fluidique avec la zone intérieure (5), ainsi qu'avec des structures de canaux (8) additionnelles optionnelles qui peuvent être amenées en liaison fluidique avec le dispositif de commutation (9), de telle sorte que les produits gazeux du reformeur peuvent être canalisés à travers les structures de canaux (8) additionnelles et/ou au moins à travers un canal de refroidissement (7), un dispositif de commutation (9) étant prévu en amont de la pile à combustible (3), lequel peut être commuté entre une position de démarrage dans laquelle une voie d'écoulement est établie pour les produits gazeux du reformeur et/ou du dispositif de mise en marche thermique via la zone extérieure (6) de la pile à combustible (3), au moins lors de l'opération de mise en marche, pour chauffer la pile à combustible (3), et au moins une position de fonctionnement, dans laquelle une voie d'écoulement est établie pour les produits gazeux du reformeur et/ou du dispositif de mise en marche thermique vers la zone intérieure (5) de la pile à combustible (3), **caractérisé en ce que** la surface dudit au moins un canal de refroidissement (7) et/ou des structures de canaux (8) additionnelles, qui est/sont traversé(es) par les produits gazeux, est revêtue par un catalyseur (10).

2. Système de piles à combustible selon la revendication 1, **caractérisé en ce que** ledit au moins un canal de refroidissement (7) s'étend dans au moins une des plaques bipolaires (4), et entre le dispositif de commutation (9) et ledit au moins un canal de refroidissement (7), il existe une liaison fluidique de telle sorte que les produits gazeux peuvent être canalisés à travers ledit au moins un canal de refroidissement (7).

3. Système de piles à combustible selon la revendication 1 ou 2, **caractérisé en ce que** les structures de canaux (8) additionnelles sont agencées de préférence dans les plaques bipolaires (4).

4. Système de piles à combustible selon l'une des revendications 1 à 3, **caractérisé en ce que** le fluide de refroidissement est de l'air.

5. Système de piles à combustible selon l'une des revendications 1 à 4, **caractérisé en ce que** la pile à combustible (3) est une pile à combustible à haute température dans la plage de température entre 100° et 200°C.

6. Système de piles à combustible selon l'une des revendications 1 à 5, **caractérisé en ce qu'**un brûleur (11) séparé, en particulier un brûleur catalytique, est agencé dans la zone des structures de canaux (8) additionnelles et/ou dudit au moins un canal de refroidissement (7).

7. Système de piles à combustible selon l'une des revendications 1 à 6, **caractérisé en ce que** le dispositif de mise en marche thermique est un brûleur approprié pour la combustion totale des combustibles mis en oeuvre.

8. Procédé de mise en marche et de fonctionnement d'un système de piles à combustible, comprenant un reformeur avec dispositif de mise en marche thermique, au moins un étage de traitement de gaz placé en aval du reformeur et au moins une pile à combustible placée en aval de l'étage de traitement de gaz, présentant une multitude de plaques bipolaires avec une zone intérieure d'une réaction, en particulier avec anode, cathode et électrolyte, et avec une zone extérieure avec au moins un canal de refroidissement à travers lequel peut passer un fluide de refroidissement et sans liaison fluidique avec la zone intérieure, le reformeur étant chauffé au moyen du dispositif de mise en marche thermique, un dispositif de commutation étant commuté en amont de la pile à combustible entre une position de démarrage dans laquelle des produits gazeux du reformeur et/ou du dispositif de mise en marche thermique sont canalisés au moins lors de l'opération de mise en marche via la zone extérieure de la pile à combustible pour chauffer la pile à combustible, et au moins une position de fonctionnement dans laquelle les produits gazeux du reformeur et du dispositif de mise en marche sont amenés à la zone intérieure de la pile à combustible, **caractérisé en ce que** les produits gazeux sont convertis chimiquement pour produire additionnellement de la chaleur au moyen d'un revêtement catalytique de la surface dudit au moins un canal de refroidissement et/ou des structures de canaux additionnelles, qui est/sont traversé(es) par les produits gazeux du reformeur.

9. Procédé selon la revendication 8, **caractérisé en ce que** le dispositif de mise en marche est déconnecté lorsque la température de fonctionnement du reformeur est atteinte, et les produits gazeux du reformeur sont alors canalisés via la zone extérieure de la pile à combustible, de préférence par ledit au moins canal de refroidissement qui s'étend de manière particulièrement préférée dans les plaques bipolaires jusqu'à ce que la pile à combustible ait atteint sa température de fonctionnement.

10. Procédé selon la revendication 8 ou 9, **caractérisé en ce que** les gaz d'échappement du dispositif de mise en marche thermique ou les produits gazeux du reformeur sont canalisés via des structures de canaux additionnelles dans la zone extérieure.

11. Procédé selon l'une des revendications 8 à 10, **caractérisé en ce que** la pile à combustible est une pile à combustible à haute température.

12. Procédé selon l'une des revendications 8 à 11, **caractérisé en ce que** la conversion a lieu lors d'une commutation en position de démarrage dans une phase de mise en marche du reformeur.

13. Procédé selon l'une des revendications 8 à 12, **caractérisé en ce que** dans la position de démarrage pendant la phase de mise en marche, le reformeur est chauffé en son service nominal, et l'hydrogène engendré en trop lors du service nominal du reformeur, qui est transformé dans la pile à combustible en position de fonctionnement, est converti dans la position de démarrage en ajoutant de l'air dans le brûleur séparé.

14. Procédé selon l'une des revendications 8 à 13, **caractérisé en ce que** la chaleur engendrée sert à préchauffer des composants de système.
